# EUROPEAN PATENT SPECIFICATION

(11) **EP 3 634 757 B1**
(45) Date of publication and mention of the grant of the patent: **02.08.2023**
(21) Application number: 18812819.3
(22) Date of filing: 06.06.2018
(51) Int. Cl.: B22F 10/28, B22F 12/00, B22F 12/44, B22F 12/53, B22F 12/55, B29C 64/153, B29C 64/205, B29C 64/236, B29C 64/241, B29C 64/25, B29C 64/268, B33Y 10/00, B33Y 30/00, B22F 12/41, B22F 12/47

(54) **3D PRINTING METHOD AND APPARATUS**
3D-DRUCKVERFAHREN UND -VORRICHTUNG
PROCÉDÉ ET APPAREIL D'IMPRESSION 3D

(30) Priority: 06.06.2017 AU 2017902153
(43) Date of publication of application: 15.04.2020
(73) Proprietor: Aurora Labs Limited, Canning Vale WA 6155 (AU)
(72) Inventor: COOK, Malcolm Peter, Canning Vale WA 6155 (AU)
(74) Representative: Bianchetti & Minoja with Trevisan & Cuonzo IPS SRL
(86) International application number: PCT/AU2018/000090
(87) International publication number: WO 2018/223175

(56) References cited:
- WO-A1-2016/009426
- US-A1- 2015 224 718
- US-A1- 2015 306 666
- US-A1- 2017 072 643
- US-A1- 2017 072 644
- US-B2- 9 573 225

## Description

### FIELD OF INVENTION

The present invention relates to a 3D printing method and apparatus.

More particularly, the present invention relates to a 3D printing method and apparatus adapted for manufacturing objects at high speed.

### BACKGROUND

Three-dimensional (3D) printed parts result in a physical object being fabricated from a 3D digital image by laying down consecutive thin layers of material.

Typically these 3D printed parts can be made by a variety of means, such as selective laser melting or sintering, which operate by having a powder bed onto which an energy beam is projected to melt the top layer of the powder bed so that it welds onto a substrate or a substratum. This melting process is repeated to add additional layers to the substratum to incrementally build up the part until completely fabricated.

These printing methods are significantly time consuming to perform and it may take several days, or weeks, to fabricate a reasonable sized object. The problem is compounded for complex objects comprising intricate component parts. This substantially reduces the utility of 3D printers and is one of the key barriers currently impeding large-scale adoption of 3D printing by consumers and in industry.

WO 2016/205855 A1 describes a printing apparatus and method for printing a three-dimensional object comprising a plurality of powder dispensers, the powder dispensers being configured to deposit multiple superjacent layers of powder onto an operative surface simultaneously and an energy source for emitting energy beams onto two or more layers of powder simultaneously.

The present invention attempts to overcome, at least in part, the aforementioned disadvantages of previous 3D printing methods and devices.

### SUMMARY OF THE INVENTION

In accordance with one aspect of the present invention, there is provided a printing apparatus for printing a three-dimensional object as defined in claim 1.

In accordance with another aspect of the present invention, there is provided a method of printing a three-dimensional object as defined in claim 8.

Further advantages are provided in the appended claims.

### BRIEF DESCRIPTION OF DRAWINGS

The present invention will now be described, by way of example, with reference to the accompanying drawings, in which:
Figure 1 is a side view of a 3D printing apparatus according to an embodiment of the invention;
Figure 2 is a further side view of the 3D printing apparatus of Figure 1;
Figure 3 is an elevated isometric view of the 3D printing apparatus of Figure 1; and
Figure 4 is a side view of a 3D printing apparatus according to a further embodiment of the invention.

### DETAILED DESCRIPTION OF THE DRAWINGS

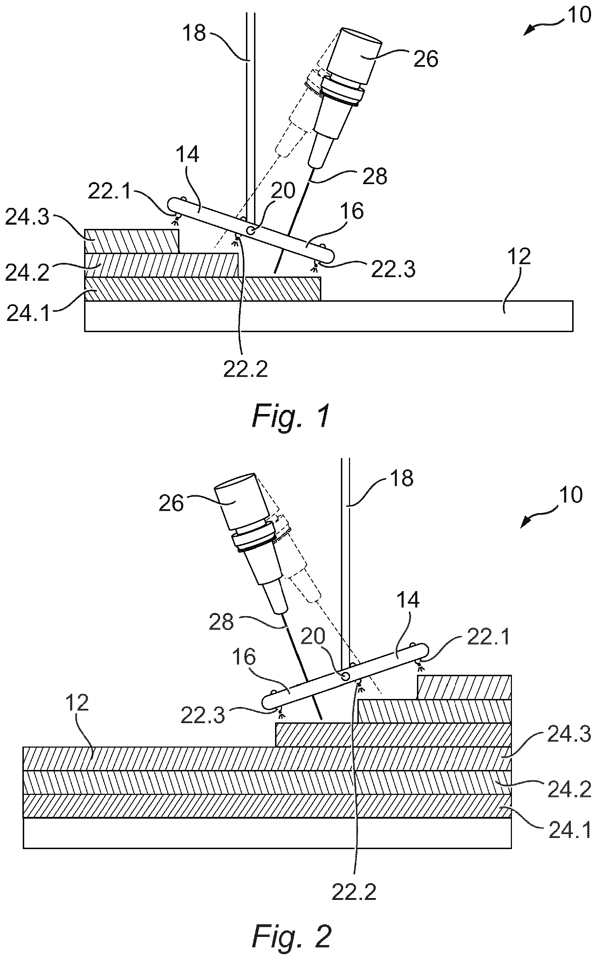

Referring to Figures 1 to 3, there is shown a printing apparatus 10 for printing a three-dimensional object according to an embodiment of the invention. The apparatus 10 comprises an operative surface 12 and a printing head 14 comprising a frame 16 attached pivotally to at least one control arm 18, wherein the frame 16 is rotatable about an axis 20 disposed at a point of attachment between the frame 16 and control arm 18.

The apparatus 10 further comprises a plurality of powder dispensers 22 connected at a plurality of positions along the frame 16, the powder dispensers 22 being configured to deposit multiple layers of powder 24 onto the operative surface 12 simultaneously when the printing head 14 travels relative to the operative surface 12. The apparatus 10 further comprises an energy source 26 for emitting at least one energy beam 28 onto at least one layer of powder 24.

More particularly, a total of three powder dispensers 22 are connected to the frame 16. Each powder dispenser 22 comprises a nozzle affixed to the frame 16 that is connected to a supply of powder, for example metallic powder, via one or more supply tubes (not shown).

The powder dispensers 22 are positioned uniformly on the frame 16 such that they are spaced apart from one another equally. The frame 16 is attached pivotally to a pair of control arms 18 and is configured such that, in use, the frame 16 is tilted about the axis 20 an angle relative to the operative surface 12.

In use, the three powder dispensers 22 simultaneously deposit three layers of powder 24 onto the operative surface 12, each layer 24 having substantially the same thickness. The layers of powder 24 are deposited in a staggered manner such that the formation of each individual layer in the plurality is commenced slightly later that the individual layer of powder immediately beneath it. This ensures that a topmost surface of each layer 24 is, at least in part, exposed and not covered by an overlying layer of powder 24 during the simultaneous application of the layers 24.

The energy beam 28 can be any one of a laser beam, a collimated light beam, a micro-plasma welding arc, an electron beam and a particle accelerator. Preferably the energy beam 28 has focusing means (not shown) being adapted to suitably focus the energy beam 28 so that an energy density being at least 10 Watts/mm³ is produced.

Where the energy beam 28 is a laser beam, the laser beam can be focused onto the operative surface 12 to a spot size of less than 0.5 mm². Similarly, where the energy beam 28 is a collimated light beam, the light beam can be focused onto the operative surface 12 to a spot size of less than 1 mm².

Further, where the energy beam 28 is a micro-plasma welding arc, the micro-plasma welding arc can be focused onto the operative surface 12 to a spot size of less than 1 mm². Such a micro-plasma welding arc is normally able to produce a focused beam of plasma gas at a temperature of about 20,000°C with a spot size of about 0.2 mm².

In use, the printing head 14 travels back and forth in a lateral direction substantially parallel to the operative surface 12 while depositing powder. For example, in Figure 1 the printing head 14 is shown travelling from a left side to a right side of the apparatus 10 while the frame 16 is titled at a clockwise angle relative to the operative surface 12. In this configuration, the printing head 14 is shown depositing an initial three layers of powder.

In Figure 2, the initial three layers of powder have been deposited and worked on by the energy beam 28 in full and the printing head 14 is shown travelling from the right side to the left side of the apparatus 10 while the frame 16 is titled at an anti-clockwise angle relative to the operative surface 12. In this configuration, the printing head 14 is shown depositing a further three layers of powder over the initial three layers.

While the layers of powder 24 are being deposited, the energy beam 28 is emitted from an energy source 26 and directed onto the exposed topmost surfaces of each layer of powder 24 to melt or sinter the powder selectively, thereby forming part of the 3D object. This process is repeated for additional passes to add additional layers and incrementally build up the 3D object until it is completed.

As depicted in Figure 1, the energy source 26 may be adapted to operate as a raster such that while the plurality of layers of powder 24 are being simultaneously deposited, the orientation of the energy source 26 is adjusted such that the energy beam 28 is directed selectively onto each of the topmost exposed surfaces of the layers 24 in the plurality in a sequential manner.

For example, the energy beam 28 may initially be directed onto a topmost surface of a lowermost layer of powder 24 in the plurality. After the surface has been sufficiently worked on by the energy beam 28, the orientation of the energy source 26 is then adjusted such that a second energy beam 28 is directed onto a topmost surface of the next superjacent layer of powder 28 in the plurality. This is continued until all deposited layers of powder in the plurality, as necessary, have been worked on sufficiently before the next pass is conducted.

In embodiments where the energy source 26 operates as a raster, the energy beam 28 may be applied to each exposed surface of each powder layer, as necessary, for a sufficient period of time such that the powder is heated or energised causing it to melt or sinter before the energy source 26 is re-orientated for the next layer in the plurality.

Alternatively, the energy beam 28 may be applied to each exposed surface of powder for a lesser period of time such that the powder is only partially heated or energised before the energy source 26 is re-orientated for the next layer. In this method, the energy source 26 is cycled repeatedly through the plurality of layers 24 in a rapid manner such that additional energy is applied to each exposed surface on each iteration. This causing the temperature or energy of each surface that is worked on to increase incrementally until it reaches a point at which the powder melts or sinters.

In the embodiment shown in Figures 1 to 3, three powder dispensers 22 are affixed to the printing head 14 for depositing three layers of powder 24 onto the operative surface 12 simultaneously. This yields a three-fold increase in printing productivity levels compared to the prior art printing apparatus and methodologies.

It will be appreciated, however, that an alternative number of powder dispensers may be used (for example, ten powder dispensers). More generally, N powder dispensers (where N ≥ 2) may be used for simultaneously depositing N layers of powder, leading to an N-fold increase in printing productivity.

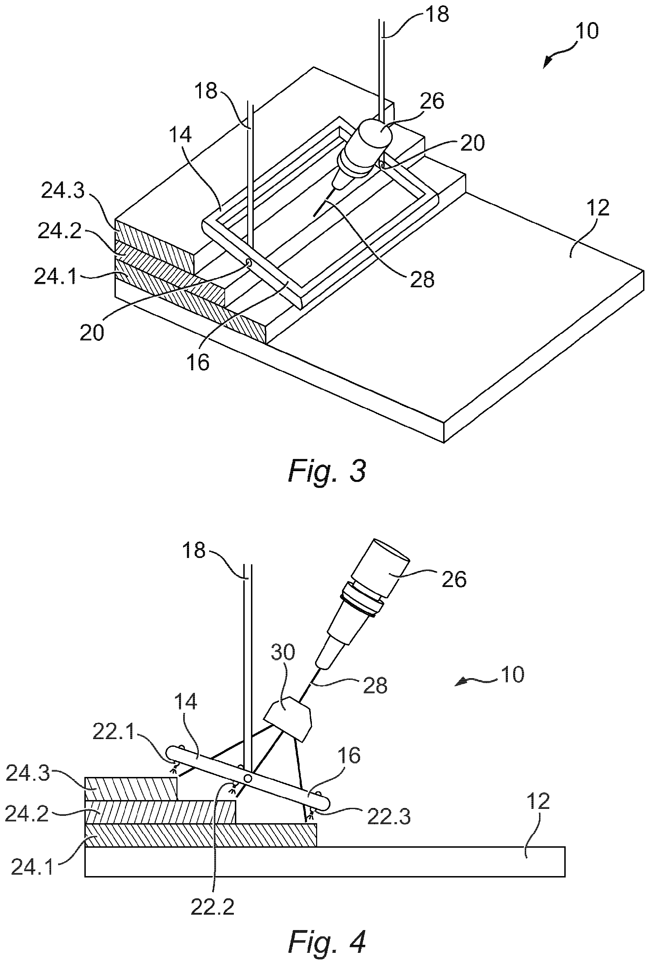

Referring to Figure 4, there is shown a further alternative embodiment of the printing apparatus 10. The apparatus 10 is identical in all material respects to the one shown in Figures 1 to 3 except that printing apparatus 10 further comprises an energy beam splitting means 30.

The energy beam splitting means 30 is configured to split the single energy beam 28 emitted from the energy source 26 into a plurality of separate directed energy beams. The energy beam splitting means 30 operates in conjunction with a control mechanism (not shown) which provides that, in use, each directed energy beam emitted from the energy beam splitting means 30 is directed, simultaneously, onto a different layer of powder 24 being deposited.

The energy beam splitting means 30 may be a beam splitter.

The energy beam splitting means 30 may be an oscillating magnetic field.

## Claims

1. A printing apparatus for printing a three-dimensional object, comprising:
an operative surface (12);
a printing head (14) comprising a frame (16) attached pivotally to at least one control arm (18), wherein the frame (16) is rotatable about an axis (20) disposed at a point of attachment between the frame (16) and control arm (18);
a plurality of powder dispensers (22.1, 22.2, 22.3) connected at a plurality of positions along the frame (16), the powder dispensers being configured to deposit multiple superjacent layers of powder (24.1, 24.2, 24.3) onto the operative surface (12) simultaneously when the printing head (14) travels relative to the operative surface (12); and
an energy source (26) for emitting energy beams (28) onto two or more layers of powder (24.1, 24.2, 24.3) simultaneously,
wherein the frame (16) is configured to be tilted at an angle when the printing head (14) is travelling in one direction, and wherein the frame (16) is configured to tilt at an opposed angle when the printing head (14) is travelling in an opposite direction, and
wherein the angle at which the frame (16) tilts is such that the distance from each powder dispenser (22.1, 22.2, 22.3) to each corresponding powder bed (24.1, 24.2, 24.3) is equal.

2. A printing apparatus according to claim 1, wherein the printing apparatus comprises an energy beam splitting means (30) for splitting and directing an energy beam (28) into two or more separate energy beams (28).

3. A printing apparatus according to claim 2, wherein the printing apparatus comprises a control mechanism configured to direct each separate energy beam (28) onto a different layer of powder (24.1, 24.2, 24.3) being deposited.

4. A printing apparatus according to claim 2 or 3, wherein the energy beam splitting means (30) is a beam splitter.

5. A printing apparatus according to any of the preceding claims, wherein the plurality of powder dispensers (22.1, 22.2, 22.3) are equally spaced relative to one another.

6. A printing apparatus according to any of the preceding claims, wherein the frame (16) is configured to deposit the multiple layers of powder (24.1, 24.2, 24.3) in a staggered manner such that the formation of each layer (24.1, 24.2, 24.3) in the plurality is commenced after the formation of the layer of powder immediately beneath it, so that each layer (24.1, 24.2, 24.3) is, at least in part, exposed and not covered by an overlying layer of powder during the simultaneous application of layers.

7. A printing apparatus according to any of the preceding claims, wherein each energy beam (28) is selected from a group consisting of a laser beam, a collimated light beam, a micro-plasma welding arc, an electron beam and a particle accelerator.

8. A method of printing a three-dimensional object using a printing apparatus, the apparatus comprising:
an operative surface (12);
a printing head (14) comprising a frame (16) attached pivotally to at least one control arm (18), wherein the frame (16) is rotatable about an axis (20) disposed at a point of attachment between the frame (16) and control arm (18);
a plurality of powder dispensers (22.1, 22.2, 22.3) connected at a plurality of positions along the frame (16), and
an energy source (26) for emitting at least two energy beams (28) simultaneously,
wherein the method comprises the following steps:
a. tilting the frame (16) at an angle relative to the operative surface (12),
b. depositing multiple superjacent layers of powder (24.1, 24.2, 24.3) from the powder dispensers (22.1, 22.2, 22.3) onto the operative surface (12) simultaneously when the printing head (14) travels relative to the operative surface (12) in one direction, whilst emitting energy beams (28) onto two or more layers of powder (24.1, 24.2, 24.3) simultaneously,
c. tilting the frame (16) at an opposed angle relative to the operative surface (12),
d. depositing multiple superjacent layers of powder (24.1, 24.2, 24.3) from the powder dispensers (22.1, 22.2, 22.3) onto the operative surface (12) simultaneously when the printing head (14) travels relative to the operative surface in an opposite direction, whilst emitting energy beams (28) onto two or more layers of powder (24.1, 24.2, 24.3) simultaneously,
wherein the angle at which the frame is tilted is such that the distance from each powder dispenser (22.1, 22.2, 22.3) to each corresponding powder bed (24.1, 24.2, 24.3) is equal.

9. Method according to claim 8, wherein each energy beam (28) is applied to a powder layer (24.1, 24.2, 24.3) for a sufficient period of time such that the powder is heated or energised causing it to melt or sinter before the energy beam (28) is applied to another layer in the plurality.

10. Method according to claim 8, wherein each energy beam (28) is applied to a powder layer (24.1, 24.2, 24.3) for a sufficient period of time such that the powder is only partially heated or energised before the energy source (26) is applied to another layer, so that temperature or energy of each surface is increased incrementally until it reaches a point at which the powder melts or sinters.

11. Method according to claim 8, wherein said energy beams (28) are split from an energy source (26) by an energy beam splitting means (30).

12. Method according to claim 11, wherein each separate energy beam (28) is directed onto a different layer of powder (24.1, 24.2, 24.3) being deposited.

13. Method according to anyone of claims 8-12, wherein the multiple layers of powder (24.1, 24.2, 24.3) are deposited in a staggered manner such that the formation of each layer in the plurality is commenced after the formation of the layer of powder immediately beneath it, so that each layer (24.1, 24.2, 24.3) is, at least in part, exposed and not covered by an overlying layer of powder during the simultaneous application of layers.

14. Method according to anyone of claims 8-13, wherein each energy beam (28) is selected from a group consisting of a laser beam, a collimated light beam, a micro-plasma welding arc, an electron beam and a particle beam.

## Patentansprüche

1. Druckvorrichtung zum Drucken eines dreidimensionalen Objekts, umfassend:
eine Arbeitsfläche (12);
einen Druckkopf (14), der einen Rahmen (16) umfasst, der schwenkbar an mindestens einem Steuerarm (18) angebracht ist, wobei der Rahmen (16) um eine Achse (20) drehbar ist, die an einem Anbringungspunkt zwischen dem Rahmen (16) und dem Steuerarm (18) angeordnet ist;
eine Vielzahl von Pulverspendern (22.1, 22.2, 22.3), die an einer Vielzahl von Positionen entlang des Rahmens (16) verbunden sind, wobei die Pulverspender ausgestaltet sind, um mehrere übereinander liegende Pulverschichten (24.1, 24.2, 24.3) gleichzeitig auf die Arbeitsfläche (12) aufzutragen, wenn sich der Druckkopf (14) relativ zu der Arbeitsfläche (12) bewegt; und
eine Energiequelle (26) zum Emittieren von Energiestrahlen (28) auf zwei oder mehr Pulverschichten (24.1, 24.2, 24.3) gleichzeitig,
wobei der Rahmen (16) ausgestaltet ist, um sich in einem Winkel zu neigen, wenn sich der Druckkopf (14) in eine Richtung bewegt, und wobei der Rahmen (16) ausgestaltet ist, um sich in einem entgegengesetzten Winkel zu neigen, wenn sich der Druckkopf (14) in eine entgegengesetzte Richtung bewegt, und
wobei der Winkel, in dem sich der Rahmen (16) neigt, so ist, dass der Abstand von jedem Pulverspender (22.1, 22.2, 22.3) zu jedem entsprechenden Pulverbett (24.1, 24.2, 24.3) gleich ist.

2. Druckvorrichtung nach Anspruch 1, wobei die Druckvorrichtung Energiestrahl-Teilungsmittel (30) zum Teilen und Richten eines Energiestrahls (28) in zwei oder mehr separate Energiestrahlen (28) umfasst.

3. Druckvorrichtung nach Anspruch 2,
wobei die Druckvorrichtung einen Steuermechanismus umfasst, der ausgestaltet ist, um jeden separaten Energiestrahl (28) auf eine andere Pulverschicht (24.1, 24.2, 24.3), die aufzubringen ist, zu richten.

4. Druckvorrichtung nach Anspruch 2 oder 3, wobei die Energiestrahl-Teilungsmittel (30) ein Strahlteiler sind.

5. Druckvorrichtung nach einem der vorhergehenden Ansprüche, wobei die Vielzahl von Pulverspendern (22.1, 22.2, 22.3) in gleichem Abstand zueinander angeordnet sind.

6. Druckvorrichtung nach einem der vorhergehenden Ansprüche, wobei der Rahmen (16) ausgestaltet ist, um die mehreren Pulverschichten (24.1, 24.2, 24.3) gestaffelt aufzutragen, so dass die Bildung jeder Schicht (24.1, 24.2, 24.3) in der Vielzahl nach der Bildung der unmittelbar darunter liegenden Pulverschicht beginnt, so dass jede Schicht (24.1, 24.2, 24.3) während des gleichzeitigen Auftragens von Schichten zumindest teilweise freiliegt und nicht von einer darüber liegenden Pulverschicht bedeckt wird.

7. Druckvorrichtung nach einem der vorhergehenden Ansprüche, wobei jeder Energiestrahl (28) aus einer Gruppe ausgewählt ist, die aus einem Laserstrahl, einem kollimierten Lichtstrahl, einem Mikroplasma-Schweißbogen, einem Elektronenstrahl und einem Teilchenbeschleuniger besteht.

8. Verfahren zum Drucken eines dreidimensionalen Objekts unter Verwendung einer Druckvorrichtung, wobei die Vorrichtung umfasst:
eine Arbeitsfläche (12);
einen Druckkopf (14), der einen Rahmen (16) umfasst, der schwenkbar an mindestens einem Steuerarm (18) angebracht ist, wobei der Rahmen (16) um eine Achse (20) drehbar ist, die an einem Anbringungspunkt zwischen dem Rahmen (16) und dem Steuerarm (18) angeordnet ist;
eine Vielzahl von Pulverspendern (22.1, 22.2, 22.3), die an einer Vielzahl von Positionen entlang des Rahmens (16) verbunden sind, und
eine Energiequelle (26) zum gleichzeitigen Emittieren von mindestens zwei Energiestrahlen (28),
wobei das Verfahren die folgenden Schritte umfasst:
a. Neigen des Rahmens (16) in einem Winkel relativ zu der Arbeitsfläche (12),
b. gleichzeitiges Auftragen mehrerer übereinanderliegender Pulverschichten (24.1, 24.2, 24.3) von den Pulverspendern (22.1, 22.2, 22.3) auf die Arbeitsfläche (12), wenn sich der Druckkopf (14) relativ zu der Arbeitsfläche (12) in eine Richtung bewegt, während Energiestrahlen (28) auf zwei oder mehr Pulverschichten (24.1, 24.2, 24.3) gleichzeitig emittiert werden,
c. Neigen des Rahmens (16) in einem entgegengesetzten Winkel relativ zu der Arbeitsfläche (12),
d. gleichzeitiges Auftragen mehrerer übereinanderliegender Pulverschichten (24.1, 24.2, 24.3) von den Pulverspendern (22.1, 22.2, 22.3) auf die Arbeitsfläche (12), wenn sich der Druckkopf (14) relativ zu der Arbeitsfläche in einer entgegengesetzten Richtung bewegt, während Energiestrahlen (28) auf zwei oder mehr Pulverschichten (24.1, 24.2, 24.3) gleichzeitig emittiert werden,
wobei der Winkel, in dem der Rahmen geneigt wird, so ist, dass der Abstand von jedem Pulverspender (22.1, 22.2, 22.3) zu jedem entsprechenden Pulverbett (24.1, 24.2, 24.3) gleich ist.

9. Verfahren nach Anspruch 8, bei dem jeder Energiestrahl (28) auf eine Pulverschicht (24.1, 24.2, 24.3) für einen ausreichenden Zeitraum einwirkt, so dass das Pulver erhitzt oder mit Energie versorgt wird, wodurch es schmilzt oder sintert, bevor der Energiestrahl (28) auf eine andere Schicht in der Vielzahl einwirkt.

10. Verfahren nach Anspruch 8,
wobei jeder Energiestrahl (28) auf eine Pulverschicht (24.1, 24.2, 24.3) für eine ausreichende Zeitspanne einwirkt, so dass das Pulver nur teilweise erhitzt oder mit Energie versorgt wird, bevor die Energiequelle (26) auf eine andere Schicht einwirkt, so dass die Temperatur oder die Energie jeder Oberfläche schrittweise erhöht wird, bis ein Punkt erreicht ist, an dem das Pulver schmilzt oder sintert.

11. Verfahren nach Anspruch 8,
wobei die Energiestrahlen (28) von einer Energiequelle (26) durch Energiestrahl-Teilungsmittel (30) geteilt werden.

12. Verfahren nach Anspruch 11, bei dem jeder einzelne Energiestrahl (28) auf eine andere Pulverschicht (24.1, 24.2, 24.3), die aufzubringen ist, gerichtet wird.

13. Verfahren nach einem der Ansprüche 8-12,
bei dem die mehreren Pulverschichten (24.1, 24.2, 24.3) gestaffelt aufgetragen werden, so dass die Bildung jeder Schicht in der Vielzahl nach der Bildung der unmittelbar darunter liegenden Pulverschicht beginnt, so dass jede Schicht (24.1, 24.2, 24.3) während des gleichzeitigen Aufbringens von Schichten zumindest teilweise freiliegt und nicht von einer darüber liegenden Pulverschicht bedeckt wird.

14. Verfahren nach einem der Ansprüche 8-13,
wobei jeder Energiestrahl (28) aus einer Gruppe ausgewählt wird, die aus einem Laserstrahl, einem kollimierten Lichtstrahl, einem Mikroplasma-Schweißbogen, einem Elektronenstrahl und einem Teilchenstrahl besteht.

## Revendications

1. Appareil d'impression pour imprimer un objet tridimensionnel, comprenant :
une surface de travail (12) ;
une tête d'impression (14) qui comprend un élément structurel (16) qui est lié de façon pivotante à au moins un bras de commande (18), dans lequel l'élément structurel (16) peut être entraîné en rotation autour d'un axe (20) qui est disposé au niveau d'un point de liaison entre l'élément structurel (16) et le bras de commande (18) ;
une pluralité d'éléments de distribution de poudre (22.1, 22.2, 22.3) qui sont connectés au niveau d'une pluralité de positions le long de l'élément structurel (16), les éléments de distribution de poudre étant configurés pour déposer de multiples couches de poudre superposées (24.1, 24.2, 24.3) sur la surface de travail (12) simultanément lorsque la tête d'impression (14) est déplacée par rapport à la surface de travail (12) ; et
une source d'énergie (26) pour émettre des faisceaux d'énergie (28) sur deux couches de poudre ou plus (24.1, 24.2, 24.3) simultanément ;
dans lequel l'élément structurel (16) est configuré pour être incliné selon un angle lorsque la tête d'impression (14) est en train d'être déplacée dans une direction, et dans lequel l'élément structurel (16) est configuré pour être incliné selon un angle opposé lorsque la tête d'impression (14) est en train d'être déplacé dans une direction opposée ; et
dans lequel l'angle selon lequel l'élément structurel (16) est incliné est tel que les distances depuis chaque élément de distribution de poudre (22.1, 22.2, 22.3) jusqu'à chaque lit de poudre correspondant (24.1, 24.2, 24.3) soient égales.

2. Appareil d'impression selon la revendication 1, dans lequel l'appareil d'impression comprend un moyen de séparation de faisceau d'énergie (30) pour séparer et diriger un faisceau d'énergie (28) selon deux faisceaux d'énergie séparés ou plus (28).

3. Appareil d'impression selon la revendication 2, dans lequel l'appareil d'impression comprend un mécanisme de commande qui est configuré pour diriger chaque faisceau d'énergie séparé (28) sur une couche de poudre différente (24.1, 24.2, 24.3) qui est déposée.

4. Appareil d'impression selon la revendication 2 ou 3, dans lequel le moyen de séparation de faisceau d'énergie (30) est un séparateur de faisceau.

5. Appareil d'impression selon l'une quelconque des revendications précédentes, dans lequel les éléments de la pluralité d'éléments de distribution de poudre (22.1, 22.2, 22.3) sont espacés de façon égale les uns par rapport aux autres.

6. Appareil d'impression selon l'une quelconque des revendications précédentes, dans lequel l'élément structurel (16) est configuré pour déposer les multiples couches de poudre (24.1, 24.2, 24.3) de manière décalée de telle sorte que la formation de chaque couche (24.1, 24.2, 24.3) de la pluralité soit commencée après la formation de la couche de poudre immédiatement en-dessous, de manière à ce que chaque couche (24.1, 24.2, 24.3) soit, au moins en partie, exposée et non recouverte par une couche de poudre surjacente pendant l'application simultanée de couches.

7. Appareil d'impression selon l'une quelconque des revendications précédentes, dans lequel chaque faisceau d'énergie (28) est sélectionné parmi un groupe constitué par un faisceau laser, un faisceau lumineux collimaté, un arc de soudage micro-plasma, un faisceau électronique et un accélérateur de particules.

8. Procédé d'impression d'un objet tridimensionnel en utilisant un appareil d'impression, l'appareil comprenant :
une surface de travail (12) ;
une tête d'impression (14) qui comprend un élément structurel (16) qui est lié de façon pivotante à au moins un bras de commande (18), dans lequel l'élément structurel (16) peut être entraîné en rotation autour d'un axe (20) qui est disposé au niveau d'un point de liaison entre l'élément structurel (16) et le bras de commande (18) ;
une pluralité d'éléments de distribution de poudre (22.1, 22.2, 22.3) qui sont connectés au niveau d'une pluralité de positions le long de l'élément structurel (16) ; et
une source d'énergie (26) pour émettre au moins deux faisceaux d'énergie (28) simultanément ;
dans lequel le procédé comprend les étapes suivantes :
a. l'inclinaison de l'élément structurel (16) selon un angle par rapport à la surface de travail (12) ;
b. le dépôt de multiples couches de poudre superposées (24.1, 24.2, 24.3) en provenance des éléments de distribution de poudre (22.1, 22.2, 22.3) sur la surface de travail (12) simultanément lorsque la tête d'impression (14) est déplacée par rapport à la surface de travail (12) dans une direction, tout en émettant des faisceaux d'énergie (28) sur deux couches de poudre ou plus (24.1, 24.2, 24.3) simultanément ;
c. l'inclinaison de l'élément structurel (16) selon un angle opposé par rapport à la surface de travail (12) ; et
d. le dépôt de multiples couches de poudre superposées (24.1, 24.2, 24.3) en provenance des éléments de distribution de poudre (22.1, 22.2, 22.3) sur la surface de travail (12) simultanément lorsque la tête d'impression (14) est déplacée par rapport à la surface de travail dans une direction opposée, tout en émettant des faisceaux d'énergie (28) sur deux couches de poudre ou plus (24.1, 24.2, 24.3) simultanément;
dans lequel l'angle selon lequel l'élément structurel est incliné est tel que les distances depuis chaque élément de distribution de poudre (22.1, 22.2, 22.3) jusqu'à chaque lit de poudre correspondant (24.1, 24.2, 24.3) soient égales.

9. Procédé selon la revendication 8, dans lequel chaque faisceau d'énergie (28) est appliqué sur une couche de poudre (24.1, 24.2, 24.3) pendant une période temporelle suffisante de telle sorte que la poudre soit chauffée ou excitée pour provoquer sa fusion ou son frittage avant que le faisceau d'énergie (28) ne soit appliqué sur une autre couche de la pluralité.

10. Procédé selon la revendication 8, dans lequel chaque faisceau d'énergie (28) est appliqué sur une couche de poudre (24.1, 24.2, 24.3) pendant une période temporelle suffisante de telle sorte que la poudre soit seulement partiellement chauffée ou excitée avant que la source d'énergie (26) ne soit appliquée sur une autre couche, de manière à ce que la température ou l'énergie de chaque surface soit augmentée de façon incrémentielle jusqu'à ce qu'elle atteigne un point auquel la poudre subit une fusion ou un frittage.

11. Procédé selon la revendication 8, dans lequel lesdits faisceaux d'énergie (28) sont séparés à partir d'une source d'énergie (26) par un moyen de séparation de faisceau d'énergie (30).

12. Procédé selon la revendication 11, dans lequel chaque faisceau d'énergie séparé (28) est dirigé sur une couche de poudre différente (24.1, 24.2, 24.3) qui est déposée.

13. Procédé selon l'une quelconque des revendications 8 à 12, dans lequel les multiples couches de poudre (24.1, 24.2, 24.3) sont déposées de manière décalée de telle sorte que la formation de chaque couche de la pluralité soit commencée après la formation de la couche de poudre immédiatement en-dessous, de manière à ce que chaque couche (24.1, 24.2, 24.3) soit, au moins en partie, exposée et non recouverte par une couche de poudre surjacente pendant l'application simultanée de couches.

14. Procédé selon l'une quelconque des revendications 8 à 13, dans lequel chaque faisceau d'énergie (28) est sélectionné parmi un groupe constitué par un faisceau laser, un faisceau lumineux collimaté, un arc de soudage micro-plasma, un faisceau électronique et un faisceau de particules.
